# EUROPÄISCHE PATENTSCHRIFT

(11) **EP 2 558 733 B1**
(45) Veröffentlichungstag und Bekanntmachung des Hinweises auf die Patenterteilung: **19.08.2015**
(21) Anmeldenummer: 11715458.3
(22) Anmeldetag: 30.03.2011
(51) Int. Cl.: F16B 5/01

(54) **SPREIZEINRICHTUNG, VERBINDUNG SOWIE SYSTEM**
SPREADING DEVICE, CONNECTION AND SYSTEM
DISPOSITIF D'EXPANSION, ASSEMBLAGE ET SYSTÈME

(30) Priorität: 12.07.2010 DE 102010026965; 13.04.2010 DE 102010014850
(43) Veröffentlichungstag der Anmeldung: 20.02.2013
(73) Patentinhaber: Flaig, Hartmut, 78554 Aldingen (DE)
(72) Erfinder: HOLSCHER, Winfried, K. W., 78234 Engen (DE)
(74) Vertreter: Wagner, Kilian
(86) Internationale Anmeldenummer: PCT/EP2011/054967
(87) Internationale Veröffentlichungsnummer: WO 2011/128207

(56) Entgegenhaltungen:
- FR-A1- 2 924 370
- US-A- 3 078 002
- US-A- 4 118 855
- US-A- 5 980 174

## Beschreibung

Die Erfindung betrifft eine Spreizeinrichtung zum Einbringen in eine Bohrung in einem Sandwichmaterial, welches ein vorderes und ein hinteres Blech aufweist, zwischen denen sandwichartig eine Metallschaumschicht aufgenommen ist, mit einem sich entlang einer Spreizeinrichtungslängsachse erstreckenden Hülsenmantel, in welchem ein Innengewinde vorgesehen ist, und mit an einem hinteren Endabschnitt der Spreizeinrichtung angeordneten, axial entgegen einer Einbringrichtung der Spreizeinrichtung gestellten Zinnen, welche vorgesehen sind, um in Einbaulage radial nach außen über den Hülsenmantel abzukragen. Ferner betrifft die Erfindung eine Verbindung, umfassend ein wie zuvor beschrieben ausgebildetes Sandwichmaterial und eine Spreizeinrichtung sowie ein System zum Herstellen einer derartigen Verbindung.

Aus der WO 2009/149789 A1 ist eine dort als Spreizhülse bezeichnete Spreizeinrichtung zum Einbringen in ein Sandwichmaterial bekannt, dessen Kern von einer Metallschaumschicht gebildet ist. Bei dem an sich bekannten Sandwichmaterial besteht in der Regel das Problem, dass in einer Einbausituation dessen von dem vorderen Metallblech gebildete Rückseite nicht oder nur schwer zugänglich ist, so dass es in der Regel nicht möglich ist, eine das Sandwichmaterial durchsetzende Schraube von der Rückseite her, d.h. auf der Außenseite des vorderen Metallbleches zu kontern. Die bekannte Spreizeinrichtung weist endseitige Zinnen auf, welche in Einbaulage radial nach außen über den Hülsenmantel abgekragt sind, damit sich diese auf der Innenseite eines in Bezug auf eine Einbringrichtung hinteren Metallbleches des Sandwichmaterials abstützen können, um ein Herausziehen der Spreizeinrichtung in axialer Richtung aus der Sandwichmaterialbohrung zu verhindern. Die Spreizeinrichtung umfasst ein Innengewinde, in welches in Einbaulage der Spreizeinrichtung eine Schraube eindrehbar ist. Die bekannte Spreizeinrichtung ermöglicht es also beliebige Anbauten an dem Sandwichmaterial durch Verschrauben festzulegen. Bei einer unzulässig großen Zugkraftbeanspruchung einer mit der Spreizeinrichtung verschraubten Schraube kann es jedoch zu einer Deformation des hinteren Metallbleches kommen, welches parallel angeordnet ist zu einem vorderen Metallblech, zu welchem die Spreizeinrichtung axial beabstandet ist.

Aus der FR 2 577 629 A1 ist eine Spreizhülse bekannt, die an beiden axialen Enden in Umfangsrichtung nebeneinander angeordnete Zinnen aufweist, wobei die Zinnen, wie sich beispielsweise aus Fig. 4a der FR 2 577 629 A1 ergibt, bereits vor dem Einbringen in eine Einführöffnung abgespreizt sind. Hierzu müssen die Zinnen elastisch und damit aus vergleichsweise dünnem Material ausgebildet sein, um ein Durchführen der von Anfang an, d.h. ursprünglich gespreizten Spreizhülse durch eine enge Öffnung zu ermöglichen. Aufgrund ihrer speziellen Ausgestaltung eignet sich die bekannte Spreizhülse nur zur Verwendung in Hohlräumen, insbesondere in Hohlkörpern bzw. Hohlprofilen und nicht in einer aus Metallschaum, insbesondere Aluminiumschaum ausgebildete Kernschicht eines Sandwichmaterials, da die bereits ursprünglich abgespreizten Zinnen beim Einbringen in der Art von Widerhaken fungieren und somit ein problemloses Einbringen der Spreizhülse in den Metallschaum unmöglich machen würden. Zudem können die dünnen Zinnen bei Radialkraftbeaufschlagung den Metallschaum nicht verdrängen. Darüber hinaus eignet sich die bekannte Spreizhülse nicht zur Aufnahme großer Lasten, da die Zinnen, wie zuvor erwähnt, um elastisch verformbar zu sein, aus vergleichsweise dünnwandigen Materialabschnitten ausgebildet sein müssen. Darüber hinaus kann mit der bekannten Spreizhülse nicht wirksam eine Deformation des vorderen Metallbleches bei zu großer Zugbelastung einer in die Spreizhülse eingeschraubten Schraube verhindern.

Aus der US 3,579,942 ist eine weitere Spreizhülse bekannt. Die abspreizbaren Arme befinden sich nicht axial hinter einem Hülsenmantel der Spreizhülse. Aufgrund der Anbindung der Spreizarme an einem vorderen Ende des Hülserimantels besteht die Gefahr, dass der Hülsenmantel der bekannten Spreizhülse bei Zugbelastung über den vorderen Öffnungsrand einer die Spreizhülse aufnehmenden Öffnung herausziehbar ist.

Aus der US 3,668,966 ist eine vielteilige, äußerst komplex ausgebildete Spreizeinrichtung bekannt, die noch dazu kein Innengewinde zur Aufnahme einer Schraube aufweist.

Ausgehend von dem vorgenannten Stand der Technik liegt der Erfindung die Aufgabe zugrunde eine verbesserte, zum Einbringen in ein Sandwichmaterial mit einer Kernschicht aus Metallschaum, insbesondere Aluminiumschaum ausgebildete Spreizeinrichtung anzugeben, mit welcher vergleichsweise große Zugkräfte aufgenommen werden können, ohne dass die Gefahr einer unzulässigen Deformation des vorderen, d.h. in Einbringrichtung vor einem hinteren (nutzerseitigem) Metallblech, angeordneten Metallblech resultiert und die aus einer einzigen Montagerichtung montierbar ist (d.h. nicht von zwei Seiten her montiert werden muss). Ferner besteht die Aufgabe darin, eine Verbindung, umfassend ein Sandwichmaterial und eine entsprechend verbesserte Spreizeinrichtung sowie ein System zum Herstellen einer derartigen, verbesserten Verbindung anzugeben.

Diese Aufgabe wird bei einer gattungsgemäßen Spreizeinrichtung dadurch gelöst, dass an einem von dem hinteren Endabschnitt abgewandten vorderen Endabschnitt der Spreizeinrichtung Mittel zum direkten Abstützen einer in die Spreizeinrichtung eingeleiteten, entgegen der Einbringrichtung orientierten Zugkraft an dem vorderen Metallblech des Sandwichmaterials vorgesehen sind.

Hinsichtlich der Verbindung wird die Aufgabe mit einer nach dem Konzept ausgebildeten Spreizeinrichtung gelöst, die aufgenommen ist in einer Bohrung in einem Sandwichmaterial, welches ein vorderes und ein hinteres Metallblech, vorzugsweise jeweils aus Vollmaterial, aufweist, die eine Metallschaumschicht sandwichartig zwischen sich aufnehmen, wobei die Zinnen (der Spreizeinrichtung) nach radial außen durch plastisches Verformen über den Hülsenmantel abgekragt sind und wobei sich die Spreizeinrichtung über die Mittel axial am vorderen Metallblech abstützt, derart, dass eine entgegen der Einbringrichtung der Spreizhülse orientierte Zugkraft direkt an dem vorderen Metallblech abstützbar ist.

Hinsichtlich des Systems wird die Aufgabe mit einer nach dem Konzept der Erfindung ausgebildeten Spreizeinrichtung und einem Montagedorn gelöst, der eine, vorzugsweise konische Umfangsschulter zum (manuellen) plastischen Abkragen der endseitigen Zinnen durch Axialkraftbeaufschlagen aufweist.

Weitere Vorteile, Merkmale und Einzelheiten der Erfindung sind in den Unteransprüchen angegeben, in den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, zusätzlich zu den axial hinter dem Hülsenmantel angeordneten Zinnen, die zum axialen Abstützen der Spreizeinrichtung in eine Zugrichtung an der Innenseite des hinteren Metallbleches dienen an dem von den Zinnen abgewandten vorderen Ende der Spreizeinrichtung Mittel zum unmittelbaren Zusammenwirken, d.h. zum direkten Abstützen bzw. Festlegen der Spreizeinrichtung an dem vorderen, d.h. in Einbringrichtung gelegenen Metallblech vorzusehen, die derart direkt mit dem vorderen Metallblech des Sandwichmaterials zusammenwirken können, das mit Hilfe der Mittel eine entgegen der Einbringrichtung orientierte Zugkraft direkt, d.h. unmittelbar durch direkten Kontakt der Mittel mit dem vorderen Metallblech in dieses eingeleitet werden können. Aufgrund der erfindungsgemäßen Ausgestaltung der Spreizeinrichtung beaufschlagt diese bei Zugkraftbelastung einer mit dem Innengewinde der Spreizeinrichtung verschraubten Schraube das hintere und das vordere Metallblech, vorzugsweise gleichermaßen, so dass die Zugkraft auf die beiden Metallbleche verteilt wird, wodurch größere Zugkraftbelastungen möglich sind, als bei den aus dem Stand der Technik bekannten Spreizhülsen, ohne dass eine unzulässige Deformation des hinteren, d.h. entgegen der Einbringrichtung orientierten bzw. gelegenen Metallbleches des Sandwichmaterials resultiert. Besonders zweckmäßig ist es, wenn die Mittel zum Zusammenwirken mit dem vorderen Metallblech an demselben, vorzugsweise durch Kalftfließpressen hergestellten Bauteil (Spreizhülse) angeordnet sind, wie die rückwärtigen Zinnen, welche bevorzugt axial unmittelbar an den Hülsenmantel angrenzen. Die Spreizhülse kann, wie vorerwähnt, als Kaltfließpressteil realisiert werden, oder auch durch spanende Bearbeitung. Eine Ausbildung aus einer Stahllegierung ist möglich - bevorzugt wird die Spreizeinrichtung jedoch aus einer Leichtmetalllegierung, insbesondere einer Aluminiumlegierung, hergestellt.

Bei einer alternativen, später noch zu erläuternden, bevorzugten Ausführungsvariante sind die rückwärtigen Zinnen und die Mittel zum Zusammenwirken mit dem vorderen Metallblech an unterschiedlichen Bauteilen der Spreizeinrichtung angeordnet, die kraftschlüssig, insbesondere formschlüssig, bevorzugt durch Verschrauben aneinander festgelegt und axial relativ zueinander verstellbar sind, um die Spreizeinrichtung universell mit unterschiedlich dicken Sandwichmaterialen verwenden zu können. Bei einer derartigen Ausführungsvariante ist es bevorzugt, wenn zumindest eines der vorgenannten Bauteile als Kaltfliespressteil ausgebildet ist - bevorzugt sind beide Bauteile als Kaltfliespressteile ausgeführt. In einer alternativen, später noch zu erläuternden Ausführungsvariante kann die Axialerstreckung der Spreizeinrichtung an die Dickenerstreckung des Sandwichmaterials, genauer den Abstand zwischen den Metallblechen, insbesondere durch Relativverdrehen zweier Bauteile angepasst werden.

Zum Überführen der nach dem Konzept der Erfindung ausgebildeten Spreizeinrichtung in ihre bestimmungsgemäße Einbaulage wird bevorzugt zunächst eine Bohrung, ausgehend von der in Bezug auf die Einbringrichtung hintere Seite des Sandwichmaterials eingebracht, wobei der Bohrungsdurchmesser bevorzugt dem Außendurchmesser des Hülsenmantels zuzüglich eines geringen Spiels entspricht. Bevorzugt definiert der Hülsenmantel den größten Durchmesser der (noch) nicht gespreizten Spreizeinrichtung. Bevorzugt entspricht der Durchmesser des von den Zinnen gebildeten Zinnenabschnittes im nicht gespreizten Zustand dem Außendurchmesser des Hülsenmantels (alternativ ist bei den Zinnen im nicht gespreizten Zustand auch ein kleinerer Außendurchmesser realisierbar). Bevorzugt ist die vorgenannte Bohrung als Stufenbohrung ausgebildet, derart, dass sich die Bohrung mit einem im Vergleich zu dem Bohrungsdurchmesser im Metallschaum kleineren Durchmesser in das vordere Metallblech fortsetzt. Die Stufenbohrung kann alternativ mittels zwei zeitlich aufeinanderfolgenden Bohrvorgängen mit Bohrern unterschiedlichen Durchmessers eingebracht werden oder durch die direkte Verwendung eines Stufenbohrers. In einem darauffolgenden Montageschritt wird die Spreizhülse mit den erfindungsgemäßen (vorderen) Mitteln voran in die Bohrung eingesetzt und die rückwärtigen Zinnen werden gespreizt, derart, dass sie den Hülsenmantel in radialer Richtung überragen und vorzugsweise derart, dass der nach dem Spreizen resultierende Außendurchmesser des Zinnenabschnittes größer bemessen ist als der Innendurchmesser der Bohrungsöffnung im hinteren Metallblech. Gleichzeitig, vor oder nach dem plastischen Aufspreizen der Zinnen werden die Mittel, je nach Ausgestaltung, wie später noch erläutert werden wird, beispielsweise durch Verschrauben oder Aufspreizen derart in unmittelbaren Kontakt bzw. Wechselwirkung mit dem vorderen Metallblech gebracht, dass über die Mittel Zugkräfte von der Spreizeinrichtung direkt, d.h. nicht nur mittelbar über dem Metallschaum in das vordere Metallblech einleitbar sind. Die erfindungsgemäße Spreizeinrichtung eignet sich zur Montage aus einer einzigen Richtung, d.h. in die einzige Einbringrichtung. Ein Kontern von der Außenseite des vorderen Metallblechs, welche i.d.R. nicht zugänglich ist, ist nicht notwendig.

Im Hinblick auf die konkrete Ausbildung des Sandwichmaterials gibt es unterschiedliche Möglichkeiten. So kann zumindest eines der Metallbleche aus einem Stahl ausgebildet werden, oder aus einem anderen Metall, vorzugsweise einem Leichtmetall, wie beispielsweise Aluminium. Es ist denkbar beide Metallbleche aus dem gleichen Material, beispielsweise Stahl oder Aluminium auszubilden, oder aus unterschiedlichen Materialien. Zudem ist es möglich Metallbleche mit der gleichen Dickenerstreckung oder mit unterschiedlichen Dickenerstreckungen, d.h. Stärken, einzusetzen. Bevorzugt sind die Metallbleche materialschlüssig insbesondere durch Verschweißen mit dem, vorzugsweise als Aluminiumschaum ausgebildeten Metallschaum verbunden, wobei alternativ auch ein Verkleben denkbar, jedoch nicht bevorzugt ist.

Ganz besonders bevorzugt ist die Axialerstreckung der Spreizeinrichtung derart auf die Dickenerstreckung des Sandwichmaterials abgestimmt, dass die Spreizeinrichtung zum einen kraftschlüssig mit dem vorderen Metallblech verbunden ist und zum anderen, ggf. nach Überwindung eines geringen Axialabstandes von vorzugsweise weniger als zwei Millimetern mit dem hinteren Metallblech in Wechselwirkung treten kann, derart, dass sich die Spreizeinrichtung mittels ihrer abgespreizten Zinnen entgegen der Einbringrichtung auf der Innenseite des hinteren Metallbleches abstützen kann. Anders ausgedrückt ist das hintere Ende der Spreizeinrichtung innerhalb des Sandwichmaterials aufgenommen und liegt an der Innenseite des hinteren Metallbleches an oder ist geringfügig (vorzugsweise weniger als 3mm, noch weiterbevorzugt weniger als 2mm) von dem hinteren Metallblech beabstandet.

Im Hinblick auf die konkrete Ausbildung der Mittel zur Kontaktierung und zum unmittelbaren Zusammenwirken mit dem vorderen, d.h. weiter in Einbringrichtung gelegenen vorderen Metallblech gibt es unterschiedliche Möglichkeiten. Besonders bevorzugt sind dabei zwei alternative Ausführungsvarianten, nämlich eine erste, nach der die Mittel ähnlich wie die rückwärtigen Zinnen ausgebildet sind, also als nach radial außen umbiegbare Halteabschnitte, mit denen das vordere Metallblech in Einbaulage auf dessen Außenseite hintergriffen werden kann und eine zweite, später noch zu erläuternde Alternative, bei der die Mittel ein Außengewinde umfassen, das mit einem Innenumfang einer Öffnung im vorderen Metallblech kraftschlüssig zur Zugkraftbeaufschlagung in Wechselwirkung treten kann. Bevorzugt greift das Außengewinde hierzu in ein Innengewinde der Öffnung ein. Das Innengewinde kann alternativ bereit vor dem Einbringen der Spreizeinrichtung vorgesehen sein, oder im Falle der Ausbildung des Außengewindes als Schneidgewinde von diesem geschnitten werden. Die Ausbildung mit Außengewinde ist besonders bevorzugt, wenn das vordere Metallblech aus Leichtmetall, insbesondere Aluminium, ausgebildet ist und/oder eine geringe Dickenerstreckung, beispielsweise von weniger als 3mm oder weniger als 2mm aufweist.

Die vorerwähnte erste Alternative zur Ausbildung der Mittel zum direkten Zusammenwirken mit dem vorderen Metallblech sieht vor, als Mittel umbiegbare Halteabschnitte vorzusehen, mit denen das vordere Metallblech auf dessen in Einbringrichtung gelegener Seite hintergriffen werden kann, um auf diese Weise Zugkräfte am vorderen Metallblech abstützen zu können.

Bevorzugt sind die Halteabschnitte derart ausgebildet, dass diese im Inneren der Spreizeinrichtung jeweils eine Anlaufschräge aufweisen, mittels der, eine vorzugsweise mittels eines Montagedorns aufgebrachte Axialkraft in eine Radialkraftkomponente umgewandelt werden kann, die wiederum für das Umbiegen und damit Hintergreifen des vorderen Metallbleches Sorge trägt. Die entsprechend ausgebildeten Halteabschnitte sind also bevorzugt in Einbringrichtung vor dem Hülsenmantel angeordnet, wohingegen die ebenfalls radial aufspreizbaren Zinnen in Einbringrichtung hinter dem Hülsenmantel vorgesehen und einstückig mit diesem ausgebildet bzw. verbunden sind.

Ganz besonders bevorzugt ist eine Ausführungsvariante, bei der die Halteabschnitte nicht unmittelbar an den Hülsenabschnitt angrenzen sondern über einen, vorzugsweise umfangsgeschlossenen Abstandsabschnitt von dem Hülsenabschnitt beabstandet sind, wobei der Abstandsabschnitt bevorzugt im Vergleich zum Hülsenabschnitt einen geringeren Außendurchmesser aufweist. Dieser Außendurchmesser entspricht bevorzugt dem Durchmesser einer in das vordere Metallblech einzubringenden Öffnung zuzüglich eines Spiels. Der Abstandsabschnitt hat somit zum einen Führung- bzw. Stabilisierungsfunktion und definiert zum anderen die Position der auf die Außenseite des vorderen Metallbleches ragenden Halteabschnitte.

Vorzugsweise sind mehrere, in Umfangsrichtung voneinander beabstandete, zumindest beabstandbare, Halteabschnitte vorgesehen, die bevorzugt voneinander durch ein sich in axialer und radialer Richtung erstreckenden Schlitz die jeweils voneinander getrennt sind. Alternativ können die Umfangsrichtung voneinander beabstandeten Halteabschnitte auch unmittelbar an den Hülsenmantel angrenzen, wobei in diesem Fall ein sich beim radialen, plastischen Verformen der Abstandabschnitte nicht oder nur geringfügig verformender unterer Bereich die Funktion des Abstandabschnittes übernimmt.

Im Falle des Vorsehens eines Abstandsabschnitts ist es bevorzugt, wenn dessen Innendurchmesser dem Kerndurchmesser, also dem kleinsten Innendurchmesser des Innengewindes entspricht.

Besonders zweckmäßig ist eine Ausführungsvariante, bei den in den Bereich innerhalb der Halteabschnitte ein Bolzenteil (Spreizbolzen) eingebracht wird, welches ein plastisches Zurückverformen der Halteabschnitte nach radial innen verhindert, um somit ein Lösen der Halteabschnitte aus ihrer Spreizposition, in welcher eine Zugkraft auf das vordere Metallblech übertragen werden kann sicher vermieden wird. Bei Bedarf kann dieses Bolzenteil auch bereits zum plastischen Aufweiten bzw. radialen Abkragen der Halteabschnitte genutzt werden. Das Bolzenteil kann, was bevorzugt ist, mit einem Außengewinde versehen sein um mit dem Hülsenmantel oder dem Abstandsabschnitt, vorzugsweise dem Innengewinde im Hülsenmantel (bzw. im vorderen Bauteil), verschraubbar zu sein.

Gemäß der zweiten bevorzugten Alternative zur Ausbildung der Mittel zum Zusammenwirken mit dem vorderen Metallblech umfassen die Mittel ein Außengewinde, welches formschlüssig, zumindest jedoch reibschlüssig mit dem Innenumfang eine Öffnung im vorderen Metallblech zusammenwirken kann. Diese Ausführungsform eignet sich insbesondere für Sandwichmaterialien, bei denen das vordere Metallblech aus Aluminium und/oder mit einer geringen Dickenerstreckung ausgebildet ist. Bevorzugt wird das Außengewinde durch Verdrehen der Spreizeinrichtung in der vorzugsweise als Stufenbohrung ausgeführten Bohrung in Sandwichmaterial mit dem vorderen Metallblech verschraubt, um auf diese Weise Zugkräfte auf das vordere Metallblech übertragen zu können.

Die vorgenannte zweite Alternative kann bevorzugt auch gleichzeitig mit der ersten Alternative vorgesehen bzw. realisiert werden, so dass die Spreizeinrichtung gleichzeitig mit dem vorderen Metallblech, genauer dem Innenumfang der Öffnung im vorderen Metallblech verschraubt sein und mittels der Halteabschnitte das vordere Metallblech hintergreifen kann.

Besonders bevorzugt ist eine Ausführungsvariante der zweiten Alternative, bei der der Außendurchmesser des Außengewindes größer ist als der Kerndurchmesser des Innengewindes und/oder kleiner ist als der Außendurchmesser des vorzugsweise zylindrisch gestalteten, bevorzugt, jedoch nicht zwingend, umfangsgeschlossenen Hülsenmantels. Auf diese Weise wird sichergestellt, dass der Öffnungsdurchmesser der Öffnung im vorderen Metallblech kleiner ist als der Durchmesser des den Hülsenmantel aufnehmenden Hauptbohrungsabschnittes.

Besonders bevorzugt ist eine Ausführungsvariante der Spreizeinrichtung, bei der in Einbaulage zwischen die gespreizten (rückwärtigen) Zinnen ein von dem Hülsenmantel separater Ring eingesetzt ist, der bevorzugt eine Axialerstreckung aufweist, die es erlaubt, eine Axialkraft in Druckrichtung unmittelbar in die Spreizeinrichtung einzuleiten, um zu vermeiden, dass unmittelbar die Außenseite des hinteren Metallbleches (unzulässig) druckbeaufschlagt wird. Hierzu ist es vorteilhaft, wenn die Axialerstreckung des Rings derart bemessen ist, dass dieser zumindest bis an die von der Außenseite des hinteren Metallblechs aufgespannten Ebene reicht oder bevorzugt diese (minimal) überragt. Zusätzlich oder alternativ kann der Ring derart ausgebildet sein, dass dieser ein unzulässiges Verbiegen (Zurückbiegen) der Zinnen nach radial Innen verhindert, um somit ein Lösen der Verbindung, umfassend die Spreizeinrichtung und das Sandwichmaterial im bestimmungsgemäßen Betrieb, beispielsweise durch Vibrationen sicher zu verhindern.

Besonders zweckmäßig ist es, wenn, insbesondere an der Stirnseite des Hülsenmantels eine Umfangsschulter vorgesehen ist, mit der sich die Spreizeinrichtung in axialer Richtung an der Innenseite des vorderen Metallbleches abstützen kann, um auf diese Weise Druckkräfte auf das vordere Metallblech übertragen zu können. Bevorzugt liegt die Umfangsschulter in einer Parallelebene zu der vom vorderen Metallblech aufgespannten Ebene.

Ganz besonders bevorzugt ist eine Ausführungsvariante, bei der das Außengewinde, mit welchem die Spreizeinrichtung, mit dem Innenumfang der Öffnung im vorderen Metallblech in Wechselwirkung treten kann, zusätzlich zu der ersten Alternative, d.h. zusätzlich zu nach radial außen umbiegbaren Halteabschnitten vorgesehen ist, mit denen das vordere Metallblech in Einbaulage hintergriffen wird. Das Vorsehen einer derartigen Kombination von Halteabschnitten und Außengewinde, also die kombinierte Ausbildung der Mittel als Halteabschnitte und Außengewinde bringt den Vorteil mit sich, dass durch die Wechselwirkung zwischen Außengewinde und vorderem Metallblech, genauer Innenumfang der Öffnung im vorderen Metallblech ein Mitverdrehen der Spreizeinrichtung beim Eindrehen einer Schraube in das Innengewinde der Spreizeinrichtung vermieden werden kann. Darüber hinaus wird die Festigkeit der Verbindung zwischen Spreizeinrichtung und vorderem Metallblech weiter erhöht.

Gemäß einer besonders bevorzugten Ausführungsvariante sind die rückwärtigen Zinnen und die vorderen Mittel zum Zusammenwirken mit dem vorderen Metallblech nicht an ein und demselben Bauteil angeordnet, sondern an zwei unterschiedlichen, kraftschlüssig miteinander verbundenen und/oder verbindbaren Bauteilen, die axial relativ zueinander verstellbar sind, so dass die Axialerstreckung des Spreizverbinders an die Dickenerstreckung des Sandwichmaterials, insbesondere an den Abstand zwischen den beiden die Metallschaumschicht zwischen sich aufnehmenden Metallblechen anpassbar ist. Ein derartig ausgebildeter Spreizverbinder ist universell einsetzbar, d.h. kann mit unterschiedlichen Metallschaumdicken aufweisenden Sandwichmaterialien eingesetzt werden. Sämtliche in Zusammenhang mit einer einteiligen Spreizhülse offenbarten Weiterbildungen bestimmter Merkmale, wie bevorzugte Ausführungsvarianten der Zinnen oder der Mittel oder eines Spreizdorns sollen auch in Zusammenhang mit der hier beschriebenen, bevorzugten Ausführungsvariante als offenbart gelten, bei der die Zinnen und die Mittel an unterschiedlichen Bauteilen angeordnet sind.

Ganz besonders zweckmäßig ist es, wenn die Zinnen an einer Hülse angeordnet sind, die mit einem das Innengewinde zum Festlegen eines Außengewindeelementes, insbesondere einer Schraube, aufweisenden (vorderen) Bauteil verschraubbar und/oder verschraubt ist. Dabei überragt die Hülse mit ihren Zinnen bevorzugt das vordere Bauteil in axialer Richtung nach hinten. Besonders zweckmäßig ist es, wenn die Hülse außen auf das vordere Bauteil aufgeschraubt ist, also einen größeren Außendurchmesser aufweist als das vordere, das Innengewinde aufweisende Bauteil. Besonders zweckmäßig ist die hintere Hülse hierzu mit einem Hülseninnengewinde ausgestattet, das mit einem am vorderen Bauteil vorgesehenen Außengewinde zusammenwirkt. Durch Relativverdrehen der hinteren Hülse und des (vorderen) Bauteils relativ zueinander können die Zinnen relativ zu den Mitteln zum Zusammenwirken mit dem vorderen Metallblech axial verstellt werden, wodurch eine optimale Längenanpassung der Spreizhülse möglich ist.

Alternativ ist eine Ausführungsvariante realisierbar, bei der das Innengewinde in dem die Zinnen aufweisenden (hinteren) Bauteil angeordnet ist, das an dem vorderen, die Mittel zum Zusammenwirken mit dem vorderen Metallblech aufweisenden Bauteil festlegbar und/oder festgelegt ist.

Besonders zweckmäßig ist es, wenn die Orientierung, d.h. die Drehrichtung des Innengewindes im vorderen Bauteil zum Festlegen eines Außengewindes entgegengesetzt ist zur Orientierung bzw. Drehrichtung des Hülseninnengewindes. Anders ausgedrückt ist das Hülseninnengewinde für den Fall, dass das Innengewinde am vorderen Bauteil als Rechtsgewinde ausgebildet ist als Linksgewinde ausgebildet bzw. ist das Hülseninnengewinde für den Fall, dass das Innengewinde als Linksgewinde ausgebildet ist als Rechtsgewinde ausgebildet.

Besonders zweckmäßig ist es, wenn der Durchmesser des von den Zinnen gebildeten Zinnenabschnittes der hinteren Hülse im nicht gespreizten Zustand dem Außendurchmesser des axial benachbarten, vorzugsweise umfangsgeschlossenen Hülsenmantels der hinteren Hülse entspricht. Alternativ kann bei den Zinnen im nicht gespreizten Zustand auch ein kleinerer Außendurchmesser realisiert sein. Bevorzugt ist die Bohrung, in die die mehrteilige Spreizeinrichtung einzubringen ist, als Stufenbohrung ausgebildet, derart, dass sich die Bohrung mit einem im Vergleich zu dem Bohrungsdurchmesser im Metallschaum kleineren Durchmesser in das Metallblech fortsetzt. Bevorzugt entspricht der Durchmesser des größeren Bohrungsabschnittes im Metallschaum zumindest näherungsweise dem Außendurchmesser der hinteren, axial, insbesondere durch Verdrehen relativ zu den Mitteln verstellbaren Hülse.

Die Erfindung führt auch auf eine Verbindung, umfassend ein wie zuvor beschrieben ausgebildetes Sandwichmaterial, welches als Mindestanforderung eine, vorzugsweise vergleichsweise dicke Metallschaumschicht, insbesondere eine Leichtmetallschaumschicht, ganz besonders bevorzugt eine Aluminiumschaumschicht aufweist, die innerhalb von zwei Deckschichten aufgenommen ist, die jeweils von einem Metallblech gebildet sind. Dabei wird hiermit definiert, dass ein vorderes Metallblech dasjenige Metallblech ist, welches in Einbringrichtung weiter vorne angeordnet ist und das hintere Metallblech dem Benutzer zugewandt ist, der die Spreizeinrichtung von hinten her in Einbringrichtung in eine, vorzugsweise als Stufenbohrung ausgebildete Bohrung in das Sandwichmaterial einbringt. Bei Bedarf kann das Sandwichmaterial auch mehr als die vorgenannten drei Schichten aufweisen - diese sind jedoch eine Minimalanforderung. Besonders bevorzugt besteht das Sandwichmaterial ausschließlich aus diesen drei Schichten. Neben dem wie zuvor beschrieben ausgebildeten Sandwichmaterial umfasst die Verbindung bevorzugt eine in eine, insbesondere als Stufenbohrung ausgebildete Bohrung eingebrachte Spreizeinrichtung, die sich um einen in Zugrichtung, d.h. entgegen der Einbringrichtung am vorderen Metallblech des Sandwichmaterials mit Hilfe speziell ausgebildeter Mittel abstützt und die entgegen der Einbringrichtung orientierte Zinnen aufweist, die bevorzugt die Bohrungsöffnung im hinteren Metallblech in radialer Richtung auf der Innenseite des hinteren Metallblechs überragt. Die Spreizeinrichtung dient zum Festlegen einer Schraube bzw. zum Herstellen einer Schraubverbindung, wobei die Schraube, die auch als Schraubbolzen ausgeführt sein kann mit dem Innengewinde des Hülsenmantels der Spreizeinrichtung verschraubbar ist. Bevorzugt stützt sich die Spreizeinrichtung in axialer Richtung nach vorne, d.h. in Einbringrichtung mit einer Umfangsschulter an der Innenseite des vorderen Metallbleches ab, in welchem weiter bevorzugt eine Bohrungsöffnung eingebracht ist, die einen geringeren Innendurchmesser aufweist als eine korrespondierende, fluchtende Bohrungsöffnung im hinteren Metallblech. Über die Umfangsschulter können Druckkräfte optimal an der Innenseite des vorderen Metallbleches abgestützt werden, was bei der aus der WO 2009/149789 A1 bekannten Spreizhülse nicht möglich war.

Ferner führt die Erfindung auch auf ein System zum Herstellen einer wie zuvor beschrieben ausgebildeten Verbindung. Dieses System umfasst neben der nach dem Konzept der Erfindung ausgebildeten Spreizeinrichtung einen Montagedorn, der eine, vorzugsweise konisch konturierte Umfangsschulter aufweist, die derart bemessen ist, dass mit dieser die hinteren Zinnen der Spreizeinrichtung in radialer Richtung abspreizbar sind, derart, dass die Zinnen den Umfangsrand der Öffnung im hinteren Metallbereich überragen. Bevorzugt ist die Axialerstreckung des Montagedorns derart bemessen, dass im Falle der Ausbildung der Mittel der Spreizeinrichtung als erster Alternative die vorderen Halteabschnitte in radialer Richtung nach außen plastisch verformbar sind. Bevorzugt umfasst der Montagedorn hierzu eine gerundete, alternativ beispielsweise auch konisch konturierte Spitze.

Weitere Vorteile, Merkmale und Einzelheiten der Erfindung ergeben sich aus der nachfolgenden Beschreibung bevorzugter Ausführungsbeispiele sowie anhand der Zeichnungen.
- Fig. 1: ein erstes Ausführungsbeispiel einer als Spreizhülse ausgebildeten Spreizeinrichtung, umfassend rückwärtige, in Umfangsrichtung nebeneinander angeordnete, radial plastisch abspreizbare Zinnen sowie vordere, ebenfalls radial abspreizbare Halteabschnitte;
- Fig. 2: die Spreizeinrichtung gemäß Fig. 1 in Einbaulage in einem Sandwichmaterial, umfassend eine als Metallschaumschicht ausgebildete Kernschicht;
- Fig. 3: ein zweites, alternatives Ausführungsbeispiel einer Spreizeinrichtung, die im hinteren Bereich dem Ausführungsbeispiel gemäß Fig. 1 entspricht und bei welcher im vorderen Bereich ein Außengewinde zum Verschrauben mit einem vorderen Metallblech einer Sandwichstruktur vorgesehen ist;
- Fig. 4: eine Verbindung, umfassend ein Sandwichelement mit Metallschaum und die Spreizhülse gemäß Fig. 3 in Einbaulage;
- Fig. 5: ein Montagedorn zur Montage einer Spreizeinrichtung, insbesondere einer Spreizeinrichtung gemäß Fig. 1,
- Fig. 6: einen Bolzen (Spreizbolzen) zum Spreizen von Halteabschnitten gemäß Fig. 1,
- Fig. 7: eine Darstellung eines Sandwichmaterials und einer mehrteiligen (noch nicht zusammengesetzten) Spreizeinrichtung,
- Fig. 8: eine im Sandwichmaterial angeordnete, mehrteilige Spreizeinrichtung im noch nicht aufgespreizten Zustand, und
- Fig. 9: die Spreizeinrichtung gemäß Fig. 8, wobei diese mit dem Sandwichmaterial fest verbunden ist, d.h. eine Verbindung darstellt.

In den Figuren sich gleiche Elemente und Elemente mit der gleichen Funktion mit den gleichen Bezugszeichen gekennzeichnet.

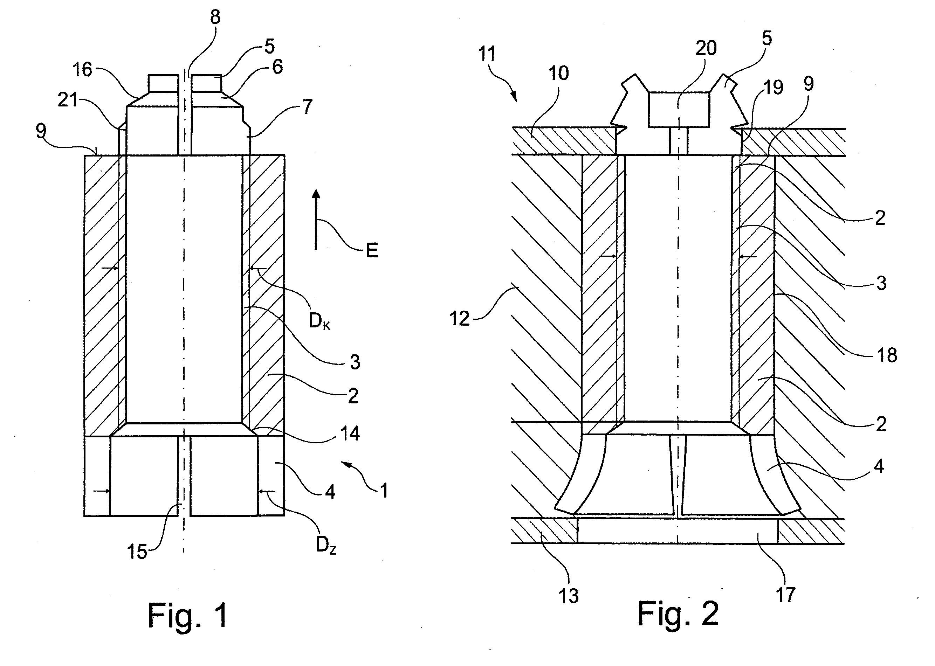

In Fig. 1 ist eine Spreizeinrichtung 1 gezeigt, die einen zentrischen Hülsenmantel 2 mit einer zylindrischen Außenkonturierung umfasst. Einteilig mit dem Hülsenmantel 2, in welchem ein Innengewinde 3 vorgesehen ist, sind hintere (rückwärtige) Zinnen 4 sowie vordere als in Umfangsrichtung beabstandete Halteabschnitte 5 ausgebildete Mittel 6 zum direkten Abstützen einer in die Spreizeinrichtung 1 eingeleiteten, entgegen einer Einbringrichtung E der Spreizeinrichtung 1 orientierten Zugkraft ausgebildet. Axial zwischen den Halteabschnitten 5 und dem einen größeren Außendurchmesser aufweisenden Hülsenmantel 2 ist ein außenzylindrisch konturierter Abstandsabschnitt 7 vorgesehen, der in dem gezeigten Ausführungsbeispiel von einem unteren Abschnitt der über Längsschlitze 8 in Umfangsrichtung voneinander beabstandeten Halteabschnitte 5 gebildet ist. Wie aus der Zeichnung ebenfalls zu erkennen ist, kann der Abstandsabschnitt 7 außengewindefrei ausgebildet sein.

Die vordere Stirnseite des Hülsenmantels 2 bildet eine ringförmige Umfangsschulter 9, die zur Anlage bzw. zum Abstützen an der Innenseite eines vorderen, in Fig. 2 gezeigten Metallbleches 10 eines Sandwichmaterials 11 (Schichtaufbau/Schichtanordnung) ausgebildet ist. Neben dem vorderen Metallblech 10 umfasst das Sandwichmaterial 11 eine als Metallschaum, insbesondere Leichtmetallschaum, vorzugsweise Aluminiumschaum ausgebildete Metallschaumschicht 12, die sandwichartig zwischen dem vorerwähnten vorderen Metallblech 10 und einem hinteren, parallel dazu verlaufenden Metallblech 13 angeordnet ist. Die Metallbleche 10, 13 sind in dem gezeigten Ausführungsbeispiel durch Flächenverschweißen mit der Metallschaumschicht 12 materialschlüssig verbunden.

Zu erkennen ist, dass der Kerndurchmesser Dₖ des Innengewindes 3 im Hülsenmantel 2 kleiner bemessen ist als der Innendurchmesser D_{z} eines hinteren, von den Zinnen 4 gebildeten Zinnenabschnittes. Ein Übergangsbereich 14 zwischen den hinteren, in Umfangsrichtung über Längsschlitze 15 voneinander beabstandeten Zinnen 4 und dem Innengewinde 3 ist als (Innen-) Konusabschnitt ausgebildet. Die Zinnen 4 sind ausgebildet und angeordnet um plastisch in radialer Richtung abgekragt werden zu können, derart, dass sie, wie in Fig. 2 gezeigt in radialer Richtung den Hülsenmantel 2 überragen. In dem in Fig. 1 dargestellten Ursprungszustand setzt sich die Außenkontur des Hülsenmantels 2 in den Zinnen 4 fort - anders ausgedrückt fluchtet die Mantelfläche der Zinnen 4 in axialer Richtung mit der Mantelfläche des Hülsenmantels 2. Denkbar wäre es auch, dass die Zinnen 4 nach radial innen versetzt angeordnet sind - wesentlich ist es, dass die Zinnen 4 den Außenumfang des Hülsenmantels 2 nicht, oder falls ja, dann nur unwesentlich im nicht abgekragten Zustand überragen, um zu ermöglichen, dass die Spreizeinrichtung 1 in eine Bohrung einführbar ist, deren Innendurchmesser dem Außendurchmesser des Hülsenmantels 2 zuzüglich eines minimalen Spiels entspricht.

Der Durchmesser des Abstandsabschnittes 7 ist (deutlich) kleiner bemessen als der Außendurchmesser des Hülsenmantels 2 und entspricht im Wesentlichen dem Durchmesser einer später noch zu erläuternden Öffnung im vorderen Metallblech 10.

Die nach radial außen plastisch abkragbaren Halteabschnitte 5 weisen innen eine Konusfläche 16 auf, mit der eine auf die Halteabschnitte 5 in Einbringrichtung E aufgebrachte Axialkraft in eine die Halteabschnitte 5 nach radial außen deformierende Radialkraftkomponente umgewandelt wird.

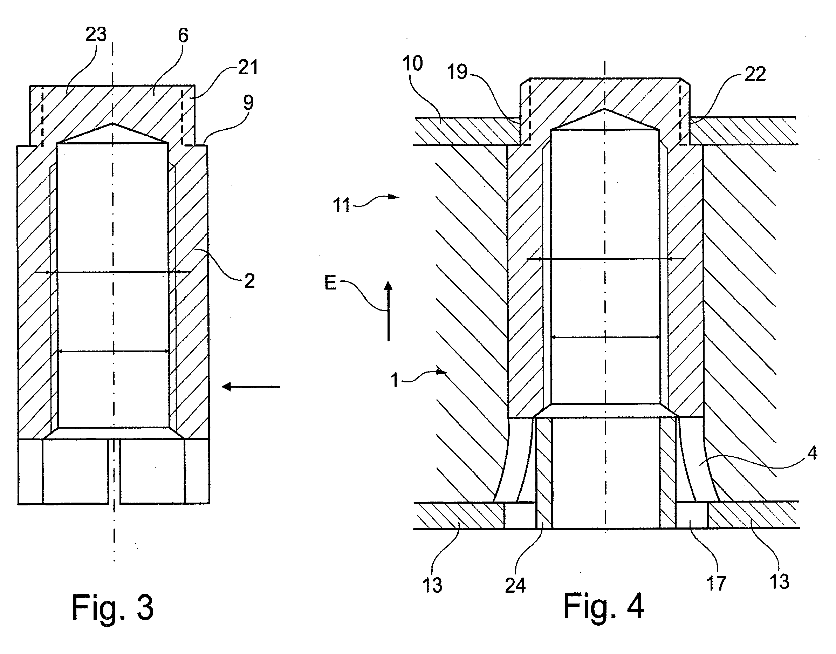

In Fig. 1 ist in der linken Zeichnungshälfte an dem in Einbaulage innerhalb der Bohrungsöffnung 19 befindlichen Abstandsabschnitt ein Außengewinde 21 gezeigt, wie dieses bei dem Ausführungsbeispiel gemäß den Fig. 3 und 4 zum Einsatz kommt. Das Außengewinde 21 ist bei dem Ausführungsbeispiel gemäß Fig. 1 fakultativ und die Spreizeinrichtung stellt, falls das Außengewinde vorgesehen ist, eine Kombination der Ausführungsbeispiele gemäß den Fig. 1 (rechte Zeichnungshälfte) und 2 einerseits und den Fig. 3 und 4 andererseits dar. Es werden also nach radial außen aufbiegbare Halteabschnitte 5 mit einem Außengewinde 21 kombiniert. Anders ausgedrückt umfassen die Mittel 6 im Falle des gleichzeitigen Vorsehens des Außengewindes 21 und der Halteabschnitte 5 sowohl die Halteabschnitte 5 zum Hintergreifen des vorderen Metallbleches 10 als auch ein Außengewinde 21, das vorgesehen ist, um mit dem Innenumfang der Bohrungsöffnung 19 im vorderen Metallblech 10, vorzugsweise formschlüssig, zusammenzuwirken.

Fig. 2 zeigt die Spreizeinrichtung 1 in Einbaulage. Zu erkennen ist, dass die Axialerstreckung der Spreizeinrichtung 1 so gewählt ist, dass sich die Spreizeinrichtung 1 zum einen mit der Umfangsschulter 9 axial an der Innenseite des vorderen Metallbleches 10 abstützen kann und andererseits der Axialabstand zwischen den in radialer Richtung aufgespreizten rückwärtigen Zinnen 4 und der Innenseite des hinteren Metallbleches 13 minimiert ist, vorzugsweise weniger als 3mm, noch weiter bevorzugt weniger als 2mm, beträgt. Zu erkennen ist, dass die Zinnen 4 derart in radialer Richtung aufgespreizt sind, dass sie sich an der Innenseite des hinteren Metallbleches 13 abstützen können. In jedem Fall überragen die Zinnen 4 den Außenumfang des Hülsenmantels 2 sowie den Innenumfang einer hinteren Bohrungsöffnung 17 im hinteren Metallblech 13, deren Durchmesser dem Durchmesser des Hülsenmantels 2 zuzüglich eines Spiels entspricht. Die Bohrungsöffnung 17 ist Teil einer als Stufenbohrung ausgeführten Bohrung 18 im Sandwichmaterial 11. Die Bohrung 18 weist in einem ersten Abschnitt einen uniformen Durchmesser auf, der dem Durchmesser der Bohrungsöffnung 17 entspricht. Dieser Abschnitt reicht in Einbringrichtung E ausgehend von dem hinteren Metallblech 13 bis an die Innenseite des vorderen Metallbleches 10. In diesem ist konzentrisch zur Bohrungslängsmittelachse eine vordere Bohrungsöffnung 19 vorgesehen, die im Wesentlichen dem Außenumfang des Abstandsabschnittes 7 der Spreizeinrichtung 1 zuzüglich eines geringen Spiels entspricht. Die Axialerstreckung des Abstandsabschnittes 7 ist so bemessen, dass dieser die Bohrungsöffnung 19 im Wesentlichen nicht überragt. Zu erkennen ist auch, dass die Halteabschnitte 5 in radialer Richtung nach außen plastisch abgekragt sind und somit den Umfangsrand der Bohrungsöffnung 19 auf der Außenseite des vorderen Metallbleches 10 hintergreifen, so dass Zugkräfte, die entgegen der Einbringrichtung E orientiert sind am vorderen Metallblech 10 abgestützt werden können.

In einem Bereich zwischen den Halteabschnitten 5 befindet sich ein Spreizbolzen 20, der nachträglich eingeführt wurde und der ein Zurückverbiegen der Halteabschnitte 5 nach radial innen verhindert. Bei Bedarf kann der Spreizbolzen 20 zumindest in einem unteren Bereich mit einem Außengewinde versehen werden, um somit mit dem Innengewinde 3 im Hülsenmantel 2 in Wechselwirkung treten zu können.

Das in den Fig. 3 und 4 gezeigte Ausführungsbeispiel einer Spreizeinrichtung 1 entspricht im rückwärtigen, d.h. hinteren Bereich dem Ausführungsbeispiel gemäß der Fig. 1 und 2, so dass im Folgenden zur Vermeidung von Wiederholungen im Wesentlichen auf Unterschiede zwischen den Ausführungsbeispielen eingegangen wird, die im Wesentlichen den vorderen Abschnitt, genauer die Ausgestaltung der Mittel 6 betreffen. Im Hinblick auf die Gemeinsamkeiten wird auf die Fig. 1 und 2 mit zugehöriger Figurenbeschreibung verwiesen. Im Unterschied zu den Fig. 1 und 2 umfassen die Mittel 6 bei dem Ausführungsbeispiel gemäß der Fig. 3 und 4 ein Außengewinde 21 zum formschlüssigen und/oder reibschlüssigen Zusammenwirken mit dem Innenumfang 22 der Bohrungsöffnung 19 im vorderen Metallblech 10 des Sandwichmaterials 11. In dem gezeigten Ausführungsbeispiel ist die Axialerstreckung des Außengewindes 21 so gewählt, dass dieses sowie ein das Außengewinde 21 tragender Axialfortsatz 23 das vordere Metallblech 10 überragt, was jedoch nicht notwendig ist, d.h. es ist auch eine Ausführungsform realisierbar, bei der die Spreizeinrichtung bündig mit der Außenseite des vorderen Metallblechs abschließt oder nach hinten zu dieser versetzt ist. Wie bei dem Ausführungsbeispiel gemäß Fig. 1 und 2 ist auch bei dem Ausführungsbeispiel gemäß in Fig. 3 und 4 am Hülsenmantel 2 eine Umfangsschulter 9 zum axialen Abstützen an der Innenseite des vorderen Bleches 10 vorgesehen. Mittels der Zinnen 4, die plastisch in radialer Richtung über den Innenumfang der hinteren Bohrungsöffnung 17 aufweitbar sind, stützt sich die Spreizeinrichtung 1 an der Innenseite des hintere Metallbleches 13 ab.

Aus Fig. 4 ist ein fakultatives Zusatzteil der Spreizeinrichtung 1 zu entnehmen, welches auch mit gleicher Funktion bei dem Ausführungsbeispiel gemäß den Fig. 1 und 2 verwendbar bzw. einsetzbar wäre. Es handelt sich um einen rückwärtigen bzw. hinteren Ring 24, über den zum einen Axialkräfte in Einbringrichtung E in die Spreizeinrichtung 1 einleitbar sind und der ein Verbiegen der Zinnen 4 nach radial innen verhindert oder zumindest erschwert. In dem gezeigten Ausführungsbeispiel ist die Axialerstreckung des Ringes 24 so bemessen, dass dieser in axialer Richtung betrachtet bis an die Außenseiten des hinteren Metallbleches 13 reicht dieses axial jedoch nicht überragt.

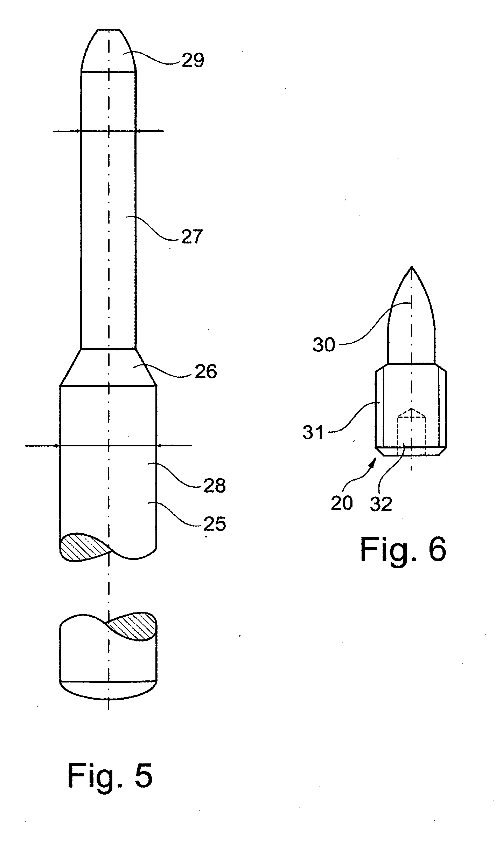

Fig. 5 zeigt einen Montagedorn 25 mit zwei axial über eine, hier konische Umfangsschulter 26 beabstandete "Axialabschnitte" 27, 28, wobei der hintere Axialabschnitt 28 einen größeren Durchmesser aufweist als der vordere Axialabschnitt 27, mit welchem die Innengewindebohrung im Spreizelement 1 durchsetzbar ist, so dass mit einer vorderen, gerundeten Spitze 29 eine Axialkraft auf die Halteabschnitte 4 einbringbar ist, um diese plastisch in radialer Richtung nach außen zu verformen. Die Umfangsschulter 26 ist derart auf die Zinnen 4 abgestimmt, dass diese derart in radialer Richtung aufweitbar sind, dass sie den Umfangsrand der hinteren Bohrungsöffnung 17 in radialer Richtung nach außen überragen.

Fig. 6 zeigt ein bevorzugtes Ausführungsbeispiel eines in Fig. 2 schematisch angedeuteten Bolzens (Spreizbolzen) als Bestandteil der in diesem Falle mehrteiligen Spreizeinrichtung 1. Der Spreizbolzen 20 gemäß Fig. 6 umfasst einen vorderen Spreizabschnitt 30 zum radialen Abspreizen der Halteabschnitte 5. Der Spreizabschnitt 30 dient zum Zusammenwirken einer inneren Haltefläche der Halteabschnitte 5. Auch ohne das Vorsehen einer solchen (fakultativen) Schrägfläche bzw. Konusfläche könnte eine radiale Spreizwirkung aufgrund der Projektilform des Spreizabschnittes 30 erzielt werden. Im Gegensatz zu den in Fig. 2 dargestellten Spreizbolzen 20 weist der Spreizbolzen 20 gemäß Fig. 6 einen hinteren Außengewindeabschnitt 31 auf, der zum Verschrauben mit dem Innengewinde 3 des Hülsenmantels 2 ausgebildet ist. In der hinteren Stirnseite des Spreizbolzens 20 befindet sich ein, hier als Inbus ausgeführter Antrieb 32 zum Verschrauben des Spreizbolzens 20 mit dem Hülsenmantel 2. Durch Verschrauben mit dem Innengewinde 3 des Hülsenmantels 2 kann der Spreizbolzen 20 in axialer Richtung nach vorne im Hülsenmantel 2 wandern und auf diese Weise mittels des Spreizabschnittes 30 die Halteabschnitte 5 derart in radialer Richtung nach außen aufweiten, dass diese in Einbaulage der Spreizeinrichtung 1 das vordere Metallblech 10 auf dessen Außenseite, d.h. auf der der Metallschaumschicht abgewandten Seite hintergreifen.

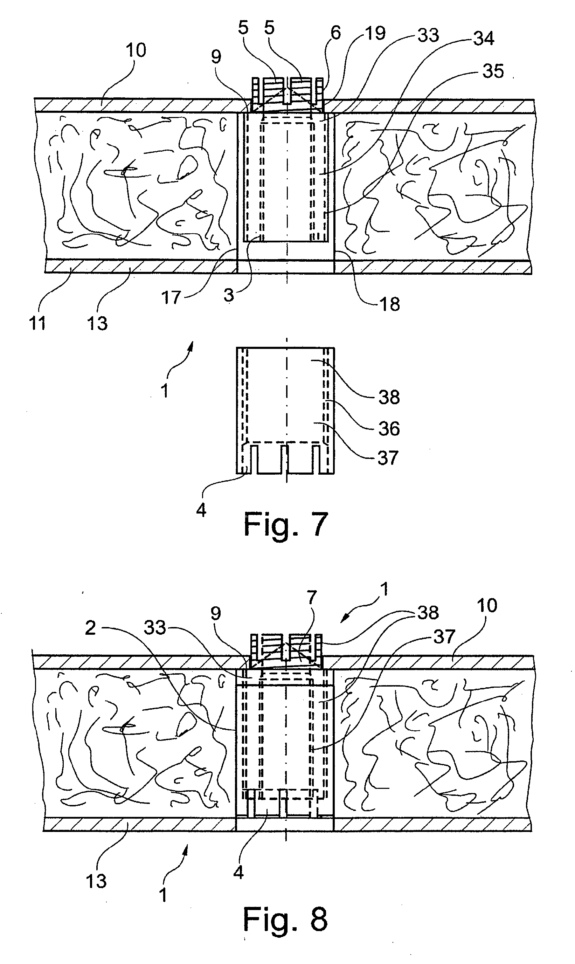

Im Folgenden wird das Ausführungsbeispiel einer alternativen Spreizeinrichtung gemäß den Fig. 7 bis 9 beschrieben, wobei zur Vermeidung von Wiederholungen im Wesentlichen auf die Unterschiede zu den voranstehenden Ausführungsbeispielen eingegangen wird. Im Hinblick auf die Gemeinsamkeiten wird auf die voranstehende Figurenbeschreibung nebst Figuren verwiesen.

Im Gegensatz zu den vorstehenden Ausführungsbeispielen umfasst die Spreizeinrichtung 1 gemäß den Fig. 7 bis 8 ein vorderes hülsenförmiges Bauteil 33, welches analog zu den vorhergehenden Ausführungsbeispielen im vorderen Bereich Mittel 6 zum Zusammenwirken mit dem vorderen Metallblech 10 des Sandwichmaterials 11 aufweist. Die Mittel 6 sind beispielsweise identisch ausgebildet, wie in Fig. 1 gezeigt, und umfassen mehrere in radialer Richtung aufweitbare, in Umfangsrichtung nebeneinander angeordnete Halteabschnitte 5, die, beispielsweise über eine innere Konusfläche Radialkraft beaufschlagbar sind. Das vordere Bauteil 33 umfasst zudem eine Umfangsschulter 9, mit welcher es sich in axialer Richtung an der Innenseite des vorderen Metallbleches 10 abstützen kann.
Axial benachbart zu den Mitteln 6 ist ein die Umfangsschulter 9 aufweisender Hülsenabschnitt 34 vorgesehen, in welchem ein Innengewinde 3 zum späteren Festlegen eines Außengewindeelementes vorgesehen ist.

Am Außenumfang des vorderen Bauteils 33 ist ein Außengewinde 35 vorgesehen, welches in dem gezeigten Ausführungsbeispiel im Gegensatz zum Innengewinde 3 als Linksgewinde ausgebildet ist. Das Außengewinde 35 dient zum Zusammenwirken mit einem korrespondierenden Hülseninnengewinde 36, welches in einem als hintere Hülse 37 ausgebildeten hinteren Bauteil 38 vorgesehen ist, welches endseitige Zinnen 4 aufweist, die vorzugsweise analog zu dem Ausführungsbeispiel gemäß Fig. 1 ausgebildet sind. Im Gegensatz zu dem Ausführungsbeispiel gemäß Fig. 1 befinden sich die Mittel 6 und die Zinnen 4 nicht an ein und demselben Bauteil sondern an zwei unterschiedlichen Bauteilen 33, 38, die durch Relativverdrehen axial relativ zueinander verstellbar sind, um somit die Axialerstreckung der Spreizeinrichtung 1, genauer den Abstand zwischen den Zinnen 4 und der Umfangsschulter 9 einstellen zu können.

In Fig. 7 sind die beiden Bauteile 33, 38 noch nicht miteinander verschraubt dargestellt. Bevorzugt werden die beiden Bauteile 33, 38 jedoch bereits im miteinander verschraubten Zustand in die als Stufenbohrung ausgebildete Bohrung 18 eingebracht. Die Bohrung 18 umfasst, wie bei den vorangehenden Ausführungsbeispielen eine vordere, im vorderen Metallblech 10 vorgesehene Bohrungsöffnung 19 und eine axial daran angrenzende hintere Bohrungsöffnung 17, deren Durchmesser größer ist als der Durchmesser der vorderen Bohrungsöffnung 19.

Nicht dargestellt, jedoch ebenfalls realisierbar ist eine Ausführungsvariante, bei der das vordere Bauteil 33 mit einem Außengewinde, welches ausgebildet und angeordnet sein kann wie das Außengewinde 21 in Fig. 1 mit dem Innenumfang der vorderen Bohrungsöffnung 19 im vorderen Metallblech 10 verschraubbar ist.

In Fig. 8 ist der Spreizverbinder 1 im montierten Zustand gezeigt. Zu erkennen ist, dass das hintere Bauteil 38 (hintere Hülse 37) mit seinem Hülseninnengewinde 36 mit dem Außengewinde 35 des Hülsenabschnittes 34 des vorderen Bauteils 33 verschraubt ist. Das vordere Bauteil 33 liegt mit seiner Umfangsschulter 9 an der Innenseite des vorderen Metallbleches 10 an. Zu erkennen ist, dass die Zinnen 4 in radialer Richtung (noch nicht) aufgespreizt sind, sondern dass der Außenumfang des Zinnenabschnittes dem Außenumfang des Hülsenmantels 2 der hinteren Hülse 37 entspricht. In dem gezeigten Ausführungsbeispiel entspricht der Durchmesser des Hülsenabschnittes 34 der hinteren Hülse 37 etwa 14mm. Der Durchmesser des Abstandsabschnittes 7 des vorderen Bauteils 33 beträgt etwa 10mm.

Zu erkennen ist, dass der Axialabstand des hinteren Endes der Zinnen 4 zu der Umfangsschulter 9 derart eingestellt ist, dass sich das hintere Ende der Zinnen 4 in etwa auf Höhe der Innenseite des hinteren Metallbleches 13 befindet.

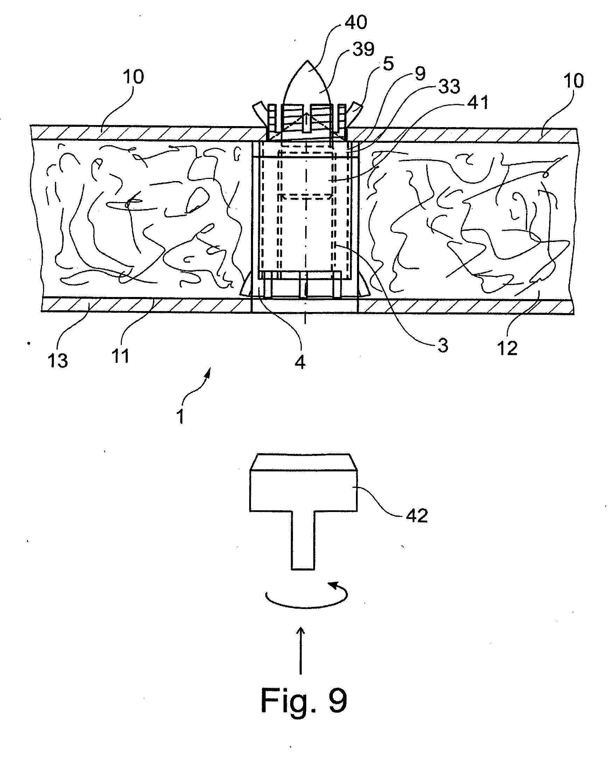

In Fig. 9 ist bereits die fertige Verbindung aus Spreizeinrichtung 1 und Sandwichmaterial 11 gezeigt. Zu erkennen ist, dass sich das vordere Bauteil 33 mit der Umfangsschulter 9 am vorderen Metallblech 10 abstützt und dass auf der Außenseite, d.h. der Vorderseite des vorderen Metallbleches 10, die Mittel 6, genauer die Halteabschnitte 5, in radialer Richtung nach außen umgebogen sind. Dies wurde realisiert mittels eines Montageteils 39, welches eine projektilartige Spitze 40 zum radialen Abkragen der Halteabschnitte 5 aufweist. Hierzu wirkt die Spitze 40 mit einer gekrümmten, vorzugsweise innenkonischen, Fläche der Haltabschnitte 5 zusammen. Zu erkennen ist, dass das Montageteil 39 mit einem Montageteilaußengewinde 41 mit dem Innengewinde 3 des vorderen Bauteils 33 verschraubt ist.

Beim radialen Abspreizen der Zinnen 4 in die Metallschaumschicht 12 hinein wird die hintere Hülse 37, d.h. das hintere Bauteil 38, relativ verdreht zu dem vorderen Bauteil 33, so dass eine Verspannung der Spreizeinrichtung 1 zwischen den Metallblechen 10, 13 erfolgt. Das radiale Aufweiten der Zinnen 4 erfolgt dabei bevorzugt mittels eines, vorzugsweise konisch konturierten, Werkzeugs 42, mit welchem die Zinnen 4 zum einen in axialer Richtung nach vorne kraftbeaufschlagt werden und zum anderen in Umfangsrichtung, so dass das hintere Bauteil 38 während des radialen Aufspreizens der Zinnen 4 nach axial hinten relativ zu dem vorderen Bauteil 33 wandert und dadurch die Spreizeinrichtung zwischen den Metallblechen 10, 13 verspannt wird. Zu erkennen ist; dass die Zinnen 4 im aufgespreizten Zustand den inneren Umfangsrand der Bohrungsöffnung im hinteren Metallblech 13 in radialer Richtung überragen und sich so in axialer Richtung abstützen.

Zum Verschrauben des Montageteils 39 axial in das vordere Bauteil 33 hinein ist das Montageteil 39 mit einem nicht dargestellten, beispielsweise imbusartigen, rückwärtigen Antrieb zum Zusammenwirken mit einem entsprechenden Werkzeug versehen.

### Bezugszeichenliste

- 1: Spreizeinrichtung
- 2: Hülsenmantel
- 3: Innengewinde
- 4: Zinnen
- 5: Halteabschnitt
- 6: Mittel
- 7: Abstandsabschnitt
- 8: Längsschlitz
- 9: Umfangsschulter
- 10: vorderes Metallblech
- 11: Sandwichmaterial
- 12: Metallschaumschicht
- 13: hinteres Metallblech
- 14: Übergangsbereich
- 15: Längsschlitz
- 16: Konusfläche
- 17: Bohrungsöffnung
- 18: Bohrung
- 19: Bohrungsöffnung
- 20: Spreizbolzen
- 21: Außengewinde
- 22: Innenumfang
- 23: Axialfortsatz
- 24: Ring
- 25: Montagedorn
- 26: Umfangsschulter
- 27: Axialabschnitt
- 28: Axialabschnitt
- 29: gerundete Spitze
- 30: Spreizabschnitt
- 31: Außengewindeabschnitt
- 32: Antrieb
- 33: vorderes Bauteil
- 34: Hülsenabschnitt
- 35: Außengewinde
- 36: Hülseninnengewinde
- 37: hintere Hülse
- 38: hinteres Bauteil
- 39: Montageteil
- 40: Spitze
- 41: Montageteilaußengewinde
- 42: Werkzeug

- E: Einbringrichtung
- D_{K}: Kerndurchmesser Innengewinde
- D_{Z}: Innendurchmesser Zinnenabschnitt

## Patentansprüche

1. Spreizeinrichtung zum Einbringen in eine Bohrung (18) in einem Sandwichmaterial (11), welches ein vorderes (10) und ein hinteres Metallblech (13) aufweist, die eine Metallschaumschicht (12) sandwichartig zwischen sich aufnehmen,
• mit einem sich entlang einer Spreizeinrichtungslängsachse erstreckenden Hülsenmantel (2), in welchem ein Innengewinde (3) vorgesehen ist, und
• mit an einem hinteren Endabschnitt der Spreizeinrichtung angeordneten, axial entgegen einer Einbringrichtung (E) der Spreizeinrichtung (1) gestellten Zinnen (4), welche vorgesehen sind, um in Einbaulage radial nach außen über den Hülsenmantel (2) abzukragen,
**dadurch gekennzeichnet,**
**dass** an einem von dem hinteren Endabschnitt abgewandten vorderen Endabschnitt der Spreizeinrichtung (1) Mittel (6) zum direkten Abstützen einer in die Spreizeinrichtung (1) eingeleiteten, entgegen der Einbringrichtung orientierten Zugkraft an dem in Bezug auf die Einbringrichtung (E) vorderen Metallblech (10) des Sandwichmaterials (11) vorgesehen sind.

2. Spreizeinrichtung nach Ansprüche 1,
**dadurch gekennzeichnet,**
**dass** die Mittel (6) radial nach außen umbiegbare Halteabschnitte (5) aufweisen, die vorgesehen sind, um das vordere Metallblech (10) in Einbaulage zu hintergreifen.

3. Spreizeinrichtung nach Anspruch 2,
**dadurch gekennzeichnet,**
**dass** die Halteabschnitte (5) im Inneren der Spreizeinrichtung (1) mit jeweils einer Anlaufschräge zum Erzeugen einer Radialkraftkomponente zum Umbiegen der Halteabschnitte (5) versehen sind.

4. Spreizeinrichtung nach einem der Ansprüche 2 oder 3,
**dadurch gekennzeichnet,**
**dass** die Halteabschnitte (5) axial von dem Hülsenabschnitt über einen im Vergleich zu dem Hülsenabschnitt außendurchmesserreduzierten Abstandsabschnitt (7) beabstandet sind, der zum Einbringen in eine Öffnung (19) im vorderen Metallblech (10) vorgesehen ist.

5. Spreizeinrichtung nach Anspruch 4,
**dadurch gekennzeichnet,**
**dass** der Innendurchmesser des Abstandsabschnitts dem Kerndurchmesser des Innengewindes entspricht und/oder dass ein, vorzugsweise mit Außengewinde versehener, Spreizbolzen (20) zum Verhindern eines Zurückverbiegens der Halteabschnitte (5) nach radial innen in einen Bereich zwischen die Halteabschnitte (5) eingebracht ist.

6. Spreizeinrichtung nach einem der vorhergehenden Ansprüche,
**dadurch gekennzeichnet, dass**
die Mittel (6) ein Außengewinde (21) zum Zusammenwirken mit dem Innenumfang (22) einer, vorzugsweise mit Innengewinde versehenen, Bohrungsöffnung (19) im vorderen Metallblech (10) aufweisen.

7. Spreizeinrichtung nach Anspruch 6,
**dadurch gekennzeichnet,**
**dass** der Außendurchmesser des Außengewindes (21) größer ist als der Kerndurchmesser des Innengewindes (3) und/oder kleiner ist als der Außendurchmesser des, vorzugsweise zylindrischen, Hülsenmantels (2).

8. Spreizeinrichtung nach einem der vorhergehenden Ansprüche,
**gekennzeichnet durch**,
einen Ring (24) der in Einbaulage zwischen die gespreizten Zinnen (4) aufnehmbar ist, um über diesen eine Axialkraft einzuleiten und/oder um eine Zurückbiegen der Zinnen (4) nach radial Innen zu verhindern.

9. Spreizeinrichtung nach einem der vorhergehenden Ansprüche,
**dadurch gekennzeichnet,**
**dass** eine in Einbringrichtung (E) orientierte Umfangsschulter (9) zum axialen Abstützen am vorderen Metallblech (10) vorgesehen ist.

10. Spreizeinrichtung nach einem der vorhergehenden Ansprüche,
**dadurch gekennzeichnet,**
**dass** die Zinnen (4) und die Mittel (6) an unterschiedlichen, axial relativ zueinander verstellbaren und miteinander kraftschlüssig, insbesondere formschlüssig, verbundenen und/oder verbindbaren Bauteilen angeordnet sind.

11. Spreizeinrichtung nach Anspruch 10,
**dadurch gekennzeichnet,**
**dass** die Zinnen (4) an einer hinteren Hülse (37) angeordnet sind, die mit einem vorderen, vorzugsweise das Innengewinde (3) aufweisenden, Bauteil (33) verschraubbar und/oder verschraubt sind.

12. Spreizeinrichtung nach Anspruch 11,
**dadurch gekennzeichnet,**
**dass** das Innengewinde (3) als Rechtsgewinde und ein Hülseninnengewinde (36) als Linksgewinde, oder dass das Innengewinde (3) als Linksgewinde und das Hülseninnengewinde (36) als Rechtgewinde ausgebildet sind.

13. Verbindung, umfassend eine Spreizeinrichtung (1) nach einem der vorhergehenden Ansprüche, die aufgenommen ist in einer Bohrung in einem Sandwichmaterial (11), welches ein vorderes (10) und ein hinteres Metallblech (13) aufweist, die eine Metallschaumschicht (12) sandwichartig zwischen sich aufnehmen, wobei die Zinnen (4) nach radial außen durch plastisches Verformen über den Hülsenmantel (2) abgekragt sind und wobei die Spreizeinrichtung (1) sich über die Mittel (6) axial am vorderen Metallblech (10) abstützt, derart dass eine entgegen der Einbringrichtung (E) der Spreizhülse orientierte Zugkraft direkt an dem vorderen Metallblech (10) abstützbar ist.

14. Verbindung nach Anspruch 13,
**dadurch gekennzeichnet,**
**dass** der Außenumfang der radial abgekragten Zinnen (4) größer ist als der Innenumfang (22) einer Öffnung (17) der Bohrung im hinteren Metallblech (13), und/oder dass sich die Spreizeinrichtung (1) mit einer Umfangsschulter (9) an einer Innenseite des vorderen Metallbleches (10) abstützt.

15. System zum Herstellen einer Verbindung nach einem der Ansprüche 13 bis 14, mit einer Spreizeinrichtung nach einem der Ansprüche 1 bis 12 und einem Montagedorn (25), umfassend eine, vorzugsweise konische, Umfangsschulter (26) zum plastischen Abkragen der endseitigen Zinnen (4) durch Axialkraftbeaufschlagen, wobei vorzugsweise die Axialerstreckung des Montagedorns (26) derart auf die Axialerstreckung der Spreizeinrichtung (1) abgestimmt ist, dass mittels des Montagedorns (26) die Halteabschnitte (5) durch Axialkraftbeaufschlagen umbieggbar sind.

## Claims

1. An expansion device for insertion in an orifice (18) in a sandwich material (11) which comprises a front (10) and a rear (13) metal sheet accommodating a layer (12) of metal foam sandwiched between them,
• with a sleeve jacket (2), inside which an internal thread (3) is provided, extending along a longitudinal axis of the expansion device, and
• with tines (4) disposed at a rear end section of the expansion device positioned axially counter to an insertion direction (E) of the expansion device (1), the tines being provided so that they splay radially outwardly beyond the sleeve jacket (2) in the installed position,
**characterized in that**
means (6) are provided at a front end section opposite to the rear end section of the expansion device (1) in order to apply a tensile force introduced into the expansion device (1) and orientated counter to the insertion direction directly to the front metal sheet (10) with respect to the insertion direction (E) of the sandwich material (11).

2. The expansion device as claimed in claim 1,
**characterized in that**
the means (6) have radially outwardly bendable retaining sections (5) which are provided in order to engage behind the front metal sheet (10) in the installed position.

3. The expansion device as claimed in claim 2,
**characterized in that**
in the interior of the expansion device (1), the retaining sections (5) are respectively provided with an inclined surface in order to produce a radial component of force in order to bend the retaining sections (5).

4. The expansion device as claimed in claim 2 or claim 3,
**characterized in that**
the retaining sections (5) are axially separated from the sleeve section via a spacer section (7) with a reduced external diameter compared with the sleeve section, which is provided for introduction into an opening (19) in the front metal sheet (10).

5. The expansion device as claimed in claim 4,
**characterized in that**
the internal diameter of the spacer section corresponds to the core diameter of the internal thread and/or **in that** an expansion bolt (20), preferably provided with an external thread, is inserted in order to prevent the retaining sections (5) from bending back radially inwardly in a region between the retaining sections (5).

6. The expansion device as claimed in one of the preceding claims,
**characterized in that**
the means (6) comprise an external thread (21) for cooperation with the internal circumference (22) of an orifice opening (19) in the front metal sheet (10) which is preferably provided with an internal thread.

7. The expansion device as claimed in claim 6,
**characterized in that**
the external diameter of the external thread (21) is larger than the core diameter of the internal thread (3) and/or is smaller than the external diameter of the sleeve jacket (2), which is preferably cylindrical.

8. The expansion device as claimed in one of the preceding claims,
**characterized by**
a ring (24) which, in the installed position, can be accommodated between the expanded tines (4) in order to introduce an axial force thereby and/or in order to prevent the tines (4) from bending back radially inwardly.

9. The expansion device as claimed in one of the preceding claims,
**characterized in that**
a circumferential shoulder (9) is provided which is orientated in the insertion direction (E) in order to bear axially upon the front metal sheet (10).

10. The expansion device as claimed in one of the preceding claims,
**characterized in that**
the tines (4) and the means (6) are disposed on different components which can be displaced axially relative to each other and which are connected and/or connectable in a frictional manner, in particular by form-fitting.

11. The expansion device as claimed in claim 10,
**characterized in that**
the tines (4) are disposed on a rear sleeve (37) which can be screwed together with and/or is screwed together with a front component (33) which is preferably provided with the internal thread (3).

12. The expansion device as claimed in claim 11,
**characterized in that**
the internal thread (3) is formed as a right-handed thread and an internal thread (36) of the sleeve is formed as a left-handed thread, or the internal thread (3) is formed as a left-handed thread and the internal thread (36) of the sleeve is formed as a right-handed thread.

13. A connection comprising an expansion device (1) as claimed in one of the preceding claims, which is accommodated in an orifice in a sandwich material (11) which comprises a front (10) and a rear (13) metal sheet which accommodate a layer of metal foam (12) sandwiched between them, wherein the tines (4) are splayed radially outwardly beyond the sleeve jacket (2) by plastic deformation and wherein the expansion device (1) bears axially on the front metal sheet (10) via the means (6) in a manner such that a tensile force orientated counter to the insertion direction (E) of the expansion device can bear directly on the front metal sheet (10).

14. The connection as claimed in claim 13,
**characterized in that**
the external circumference of the radially splayed tines (4) is larger than the internal circumference (22) of an opening (17) of the orifice in the rear metal sheet (13), **and/or in that** a circumferential shoulder (9) of the expansion device (1) bears against an inner side of the front metal sheet (10).

15. A system for producing a connection as claimed in claim 13 or claim 14, with an expansion device as claimed in one of claims 1 to 12 and an assembling mandrel (25) comprising a preferably conical circumferential shoulder (26) for plastic splaying of the terminal tines (4) by applying axial force, wherein the axial extent of the assembling mandrel (25) is preferably matched to the axial extent of the expansion device (1) such that the retaining sections (5) can be bent by applying axial force using the assembling mandrel (26).

## Revendications

1. Dispositif expansible à introduire dans un alésage (18) dans un matériau sandwich (11), qui présente une tôle métallique antérieure (10) et une tôle métallique postérieure (13), qui contiennent entre elles, à la manière d'un sandwich, une couche de mousse métallique (12),
• avec une enveloppe de douille (2) s'étendant le long de l'axe longitudinal du dispositif expansible, dans laquelle il est prévu un filet intérieur (3), et
• avec des créneaux (4) disposés sur une partie terminale arrière du dispositif expansible et placés axialement à l'opposé d'une direction d'introduction (E) du dispositif expansible (1), qui sont prévus pour s'écarter, en position de montage, radialement vers l'extérieur sur l'enveloppe de douille (2),
**caractérisé en ce qu'**il est prévu sur une partie terminale avant du dispositif expansible (1) tournée à l'opposé de la partie terminale arrière des moyens (6) pour l'appui direct d'une force de traction introduite dans le dispositif expansible (1) et orientée à l'encontre de la direction d'introduction sur la tôle métallique antérieure (10) par rapport à la direction d'introduction (E) du matériau sandwich (11).

2. Dispositif expansible selon la revendication 1, **caractérisé en ce que** les moyens (6) présentent des parties de maintien (5) pliables radialement vers l'extérieur, qui sont prévues pour s'accrocher derrière la tôle métallique antérieure (10) dans la position de montage.

3. Dispositif expansible selon la revendication 2, **caractérisé en ce que** les parties de maintien (5) sont munies respectivement à l'intérieur du dispositif expansible (1) d'une rampe d'entrée pour la production d'une composante de force radiale pour le pliage des parties de maintien (5).

4. Dispositif expansible selon l'une des revendications 2 ou 3, **caractérisé en ce que** les parties de maintien (5) sont espacées axialement de la partie de douille sur une partie d'écartement (7) de diamètre extérieur réduit par comparaison avec la partie de douille, qui est prévue pour l'introduction dans une ouverture (19) dans la tôle métallique antérieure (10).

5. Dispositif expansible selon la revendication 4, **caractérisé en ce que** le diamètre intérieur de la partie d'écartement correspond au diamètre de noyau du filet intérieur et/ou **en ce qu'**un boulon expansible (20), de préférence doté d'un filet extérieur, est introduit dans une région comprise entre les parties de maintien (5) pour empêcher le pliage inverse des parties de maintien (5).

6. Dispositif expansible selon l'une quelconque des revendications précédentes, **caractérisé en ce que** les moyens (6) présentent un filet extérieur (21) destiné à coopérer avec la périphérie intérieure (22) d'une ouverture d'alésage (19) dans la tôle métallique antérieure (10), de préférence dotée d'un filet intérieur.

7. Dispositif expansible selon la revendication 6, **caractérisé en ce que** le diamètre extérieur du filet extérieur (21) est plus grand que le diamètre de noyau du filet intérieur (3) et/ou plus petit que le diamètre extérieur de l'enveloppe de douille (2), de préférence cylindrique.

8. Dispositif expansible selon l'une quelconque des revendications précédentes, **caractérisé par** un anneau (24) qui, en position de montage, peut être logé entre les créneaux expansés (4), afin d'introduire par celui-ci une force axiale et/ou d'empêcher un pliage inverse des créneaux (4) radialement vers l'intérieur.

9. Dispositif expansible selon l'une quelconque des revendications précédentes, **caractérisé en ce qu'**il est prévu un épaulement périphérique (9) orienté dans la direction d'introduction (E) pour l'appui axial sur la tôle métallique antérieure (10).

10. Dispositif expansible selon l'une quelconque des revendications précédentes, **caractérisé en ce que** les créneaux (4) et les moyens (6) sont disposés sur des composants différents, déplaçables axialement l'un par rapport à l'autre et assemblés ou pouvant être assemblés l'un à l'autre par adhérence, en particulier par emboîtement.

11. Dispositif expansible selon la revendication 10, **caractérisé en ce que** les créneaux (4) sont disposés sur une douille postérieure (37), qui peut être et/ou est vissée avec un composant antérieur (33), présentant de préférence le filet intérieur (3).

12. Dispositif expansible selon la revendication 11, **caractérisé en ce que** le filet intérieur (3) est réalisé comme filet à droite et un filet intérieur de douille (36) comme filet à gauche, ou **en ce que** le filet intérieur (3) est réalisé comme filet à gauche et le filet intérieur de douille (36) comme filet à droite.

13. Assemblage, comprenant un dispositif expansible (1) selon l'une quelconque des revendications précédentes, qui est logé dans un alésage dans un matériau sandwich (11), qui présente une tôle métallique antérieure (10) et une tôle métallique postérieure (13), qui contiennent entre elles, à la manière d'un sandwich, une couche de mousse métallique, dans lequel les créneaux (4) sont pliés radialement vers l'extérieur par déformation plastique sur l'enveloppe de douille (2) et dans lequel le dispositif expansible (1) s'appuie par les moyens (6) axialement sur la tôle métallique antérieure (10), de telle manière qu'une force de traction orientée à l'encontre de la direction d'introduction (E) de la douille expansible puisse s'appuyer directement sur la tôle métallique antérieure (10).

14. Assemblage selon la revendication 13, **caractérisé en ce que** la périphérie extérieure des créneaux écartés radialement (4) est plus grande que la périphérie intérieure (22) d'une ouverture (17) de l'alésage dans la tôle métallique postérieure (13), et/ou **en ce que** le dispositif expansible (1) s'appuie avec un épaulement périphérique (9) sur un côté intérieur de la tôle métallique antérieure (10).

15. Système de réalisation d'un assemblage selon une des revendications 13 à 14, avec un dispositif expansible selon l'une quelconque des revendications 1 à 12 et avec un mandrin de montage (25), comprenant un épaulement périphérique (26), de préférence conique, pour l'écartement plastique des créneaux d'extrémité (4) par application de force axiale, dans lequel l'extension axiale du mandrin de montage (25) est accordée avec l'extension axiale du dispositif expansible (1), de telle manière que les parties de maintien (5) puissent être pliées au moyen du mandrin de montage (25) par application de force axiale.
